# EUROPEAN PATENT SPECIFICATION

(11) **EP 3 614 717 B1**
(45) Date of publication and mention of the grant of the patent: **16.08.2023**
(21) Application number: 18190189.3
(22) Date of filing: 22.08.2018
(51) Int. Cl.: H04W 24/08, G07C 5/08

(54) **RADIO SIGNAL RECORDER, RADIO SIGNAL ANALYZER AND RADIO SIGNAL ANALYZING METHOD**
FUNKSIGNAL REKORDER, FUNKSIGNAL ANALYSATOR UND FUNKSIGNAL ANALYSEVERFAHREN
ENREGISTREUR DE SIGNAUX RADIO, ANALYSEUR DE SIGNAUX RADIO ET PROCEDE D'ANALYSE DE SIGNAUX RADIO

(43) Date of publication of application: 26.02.2020
(73) Proprietor: Rohde & Schwarz GmbH & Co. KG, 81671 München (DE)
(72) Inventor: ALDRIDGE, Christopher Anthony, 737796 Singapore (SG); WONG, Kok Meng, 824201 Singapore (SG); FISCHLEIN, Michael, 409050 Singapore (SG); DURAI, Rajashekar, 509735 Singapore (SG); BACOR, Gerson Calamba, Melbourne, Victoria 3128 (AU)
(74) Representative: Isarpatent

(56) References cited:
- WO-A1-2017/127421
- US-A1- 2010 250 021
- US-A1- 2015 030 098
- US-A1- 2016 286 409
- US-A1- 2017 237 484
- US-B1- 6 246 933

## Description

### TECHNICAL FIELD

The present invention relates to a radio signal recorder, a radio signal analyzer and a radio signal analyzing method. In particular, the present invention relates to recording and analyzing radio frequency signals provided to a vehicle.

### BACKGROUND

US 2010/250021 A1 describes a system and method for event scoring and reporting. The system includes onboard vehicular driving event detectors that record data related to detected driving events, selectively store or transfer data related to said detected driving events. If elected, the onboard vehicular system will score a detected driving event, compare the local score to historical values previously stored within the onboard system, and upload selective data or data types to a remote server if the system concludes that a serious driving event has occurred.

Even though applicable to any kind of vehicle, the present invention and its underlying problem will hereinafter be discussed in connection with a wireless communication of a car.

Many vehicles, for example cars, buses, trains, airplanes, drones, ships, etc. perform wireless communications. For example, a vehicle may communicate through cellular protocols (e.g. LTE, 3G, 2G), WiFi (IEEE802.11p), satellite or any other kind of proprietary protocol. In addition, more and more devices such as smartphones, tablets, wearables, etc. may be connected wirelessly with the vehicle. The increasing number of devices performing a wireless communication may cause interferences to one another. Thus, there is a need to monitor the wireless signaling conditions and the network events. In particular, it is desirable to monitor the wireless conditions during maintenance, system health check or in an event of a system failure.

In particular, it is desirable to monitor the wireless conditions of autonomous or self-driving vehicles. For example, by monitoring the wireless conditions, it may be possible to identify malfunctions or failures. Furthermore, it may be possible to analyze irregularities. Hence, the reliability of the system performing wireless communications can be improved based on the monitoring and analyzing of radio frequency signals for a wireless communication of a vehicle.

Against this background, it is an object of the present invention to provide a recording of radio frequency data of a radio frequency signal provided to a vehicle. Furthermore, the present invention aims to provide a radio signal analyzer for analyzing the radio frequency signals provided to a vehicle.

### SUMMARY

The present invention provides a radio signal recorder, a radio signal analyzer and a radio signal analyzing method with the features of the independent claims. Further embodiments are subject matter of the dependent claims.

According to the present invention, a radio signal recorder is provided, as defined by independent claim 1. The radio signal recorder may perform a recording of radio frequency data of a radio frequency signal provided to a vehicle. The recorder comprises a radio frequency receiver, a first memory, a second memory, a trigger interface and a processor. The radio frequency receiver is adapted to receive a radio frequency signal being a same or at least similar frequency range than the receiver or transceiver used by the vehicle. The radio frequency receiver further provides baseband data of the received radio frequency signal. The first memory is adapted to continuously store the baseband data provided by the radio frequency receiver. The first memory is configured to record the baseband data of a predetermined amount of data or relating to a predetermined period of time such that, upon receiving data exceeding the predetermined amount of data or the predetermined period of time, oldest data is overwritten by newly received data. Further, the trigger interface is adapted to receive a trigger signal from a controller of the vehicle, and the processor is adapted to transfer the baseband data stored in the first memory to the second memory upon a predetermined trigger signal has been received by the trigger interface.

According to a further aspect, a radio signal analyzer is provided. The radio signal analyzer may analyze a radio frequency signal provided to a vehicle. The radio signal analyzer comprises a radio signal recorder according to the first aspect and an analyzing device. The analyzing device is adapted to analyze the baseband data stored in the second memory of the radio signal recorder.

According to the present invention, a radio signal analyzing method is provided as defined by independent claim 15. The radio signal analyzing method may analyze a radio frequency signal provided to a vehicle. The method comprises a step of receiving a radio frequency signal and a step of providing baseband data of the received radio frequency signal. The method further comprises a step of continuously storing the provided baseband data in a first memory. The first memory is configured to record the baseband data of a predetermined amount of data or relating to a predetermined period of time such that, upon receiving data exceeding the predetermined amount of data or the predetermined period of time, oldest data is overwritten by newly received data. Further, the method comprises a step of receiving a trigger signal from a controller of the vehicle and a step of transferring the baseband data stored in the first memory to a second memory upon receiving the trigger signal.

The present invention is based on the fact that monitoring radio frequency signals, in particular baseband data of a radio frequency signal, may serve as a helpful basis for analyzing the reliability of a wireless communication of a vehicle.

The present invention takes into account this fact and aims to provide a recording and analyzing of radio frequency data of a radio frequency signal provided to a vehicle. It is for this purpose that baseband data of a radio frequency signal are continuously stored in a first memory. Upon a predetermined trigger event is detected, the continuously stored data are copied to a further, second memory for a later analysis. In this way, the baseband data of a radio frequency signal are available for a detailed analysis related to the trigger event.

The radio frequency receiver may be any kind of receiver which is appropriate for receiving a specific radio frequency signal. For example, the radio frequency receiver may be located at a spatial position close to a radio frequency receiver or transceiver which performs the wireless communication of the vehicle. Accordingly, by locating the radio frequency receiver of the radio signal recorder in proximity of a receiver or transceiver of the vehicle, the radio frequency receiver may receive the same or at least almost the same radio frequency signals. Hence, the received signal and consequently, the related baseband data may correspond to the signals received by the receiver or transceiver of the vehicle.

The radio frequency receiver of the radio signal recorder may comprise a separate antenna and a separate receiving device for receiving radio frequency signals. In this case, the antenna of the radio frequency receiver may be located in spatial proximity of an antenna of the receiver or transceiver of the vehicle for performing the wireless communication. Alternatively, it may be also possible that a same antenna is used for the receiver or transceiver of the vehicle which performs the wireless communication and the receiver of the radio signal recorder. Accordingly, a same radio frequency signal may be provided to the receiver or transceiver of the vehicle and the radio frequency receiver of the radio signal recorder.

The radio frequency receiver may receive a radio frequency signal and extract a baseband signal included in the radio frequency signal. Accordingly, the radio frequency receiver may be adapted to receive radio frequency signals in a same or at least similar frequency range than the receiver or transceiver used by the vehicle for wireless communication.

For example, the radio frequency receiver may comprise a local oscillator and a mixer for obtaining the baseband signal. However, any other appropriate configuration for extracting the baseband signal from the received radio frequency signal may be also possible.

The baseband signal may be, for example, a complex baseband signal. For instance, the baseband signal may comprise an in-phase (I) and a quadrature (Q) component. Accordingly, if the baseband signal comprises more than one component, the individual components may be provided as separate signals.

For a further processing of the baseband signal, the baseband signal may be converted to a digital signal. For this purpose, the radio frequency receiver may comprise an analogue to digital converter for converting the provided baseband signal to digital baseband data. It is understood that the baseband signal has to be converted with an appropriate accuracy, in particular an appropriate sampling rate and/or resolution. For this purpose, the Nyquist condition has to be taken into account, i.e. a frequency for sampling the baseband signal has to be at least twice the highest frequency of the baseband signal. In case the baseband signal comprises more than one signal, e.g. an in-phase (I) and a quadrature (Q) component, separate analogue to digital converters may be used for each component of the baseband signal.

It is understood that the radio frequency receiver may comprise further components such as filters, amplifiers, attenuators or the like.

The baseband data, i.e. the digitally sampled baseband signal, is provided to the first memory. Accordingly, the first memory may continuously store the baseband data. In particular, the first memory may store baseband data relating to a predetermined period of time or a predetermined amount of data. After the baseband data of the predetermined period of time or the predetermined amount of data are stored in the first memory, the oldest data are overwritten by newly received data. For example, the first memory may store baseband data relating to a specific time, for example 1 second, 10 seconds, 30 seconds, 1 minute, 5 minutes, 15 minutes, an hour or even more.

The first memory may be a fast memory, i.e. a memory which can store the baseband data provided by the radio frequency receiver with a high writing rate. In particular, the first memory may be a volatile memory, e.g. a dynamic random access memory (DRAM).

The trigger interface may receive an external trigger signal. For example, the external trigger signal may be provided from any kind of device of the vehicle. For instance, the trigger signal may be provided from a controller of the vehicle upon detecting a predetermined event. It may be further possible to use any kind of sensor for detecting a specific event and providing a trigger signal upon detecting the specific event. However, any other kind of trigger signal may be used for triggering.

Upon detecting a trigger event, e.g. receiving the corresponding trigger signal, the data stored in the first memory may be transferred to the second memory. For example, the data stored in the first memory may be copied to the second memory. The transfer of the data from the first memory to the second memory may be controlled by the processor. For example, the processor may read the data stored in the first memory and write the read data to the second memory.

In order to simplify the transfer of the data from the first memory to the second memory, it may be possible to stop or interrupt the recording of further baseband data in the first memory. However, it may be also possible that the recording of the baseband data provided by the radio frequency receiver may be continued during the transfer of the data from the first memory to the second memory. In this case, the transfer of the data from the first memory to the second memory might be started with the oldest data, since the oldest data might be overwritten first by new data, firstly.

The second memory may be any kind of appropriate memory. In particular, the second memory may be a nonvolatile memory. For example, the second memory may be a secure digital (SD) memory card, a universal serial bus (USB) stick or any other kind of nonvolatile memory. In particular, the second memory may be a removable memory. Accordingly, the second memory may be removed (and substituted by another memory) and put into another device for a further analysis. Alternatively, the second memory may be a fixed memory which cannot be removed. In this case, an analyzing device may read out the data stored in the second memory, or the data of the second memory may be transferred to a further memory, for example a memory of an analyzing device or an external storage device.

The second memory may comprise a storage capacity which is higher than the storage capacity of the first memory. For example, the storage capacity of the second memory may be a multiple of the storage capacity of the first memory. Accordingly, the baseband data relating to multiple trigger events may be stored in the second memory.

The processor may be, for example a general purpose processor with corresponding instructions. For example, instructions may be stored in a further memory in association with the processor. The processor may further execute an operating system that loads and executes the instructions. The processor may be, for example, an Intel processor that runs a Windows or Linux operating system that executes the instructions. Alternatively, the processor may be a processor of a measurement device that runs, for example, an embedded operating system that loads and executes the instructions.

Further embodiments of the present invention are subject of the further subclaims and of the following description, referring to the drawings.

In a possible embodiment, the baseband signal may comprise in-phase data and quadrature data (IQ data).

The baseband signal may be a complex baseband signal comprising an in-phase and a quadrature component. Accordingly, the baseband data may be provided separately for the in-phase and the quadrature component, as a single, complex data stream.

In a possible embodiment, the trigger interface may be adapted to receive a trigger signal related to at least one of a collision warning, a collision event, a malfunction, a power failure or an emergency stop of the vehicle.

However, it is understood that any other kind of event for triggering the transfer of the data from the first to the second memory may be also possible. As already mentioned above, the trigger signal may be provided from a control system of the vehicle. Furthermore, it may be also possible to provide the trigger signal by a separate sensor. For example, an acceleration sensor may be used for detecting a collision or an emergency stop. Furthermore, sensor systems such as a radar, a Lidar, ultrasonic sensors etc. may be used for detecting a specific event and providing a trigger signal upon detecting such a specific event. Alternatively, it may be also possible that a control system of the vehicle may detect a failure or malfunction and provide a trigger signal upon detecting such an event. For example, the control system may detect an abnormal state of the vehicle or at least one subsystem of the vehicle. In particular, the control system may detect an abnormal state of the subsystem which uses wireless communication. Accordingly, the baseband data, which are transferred to the second memory in response to the trigger signal, may be used for analyzing circumstances in association with an event causing the trigger signal.

In a possible embodiment, the radio signal recorder may comprise a clock device. The clock device may be adapted to provide time information. Furthermore, the first memory may be adapted to store the baseband data in association with the corresponding time information provided by the clock device.

The time information may be, for example, a time stamp or the like. For example, the clock device may be synchronized with a further clock of the vehicle. Thus, the baseband data may be analyzed in association with further data, for example data recorded in an additional failure memory of the vehicle.

For example, the baseband data may be stored in the first memory in form of packets. Accordingly, a time stamp may be added to each data packet stored in the first memory. However, any other scheme for storing a time information in association with the baseband data may be also possible. For example, a time information may be recorded in the first memory in predetermined intervals or the like.

In a possible embodiment, the radio signal recorder may comprise a data interface. The data interface may be adapted to communicatively couple the second memory and an external storage device.

Accordingly, the baseband data stored in the second memory may be further transferred to an external storage device via the data interface. In particular, the data of the second memory may be transferred to the external storage device via a wired or wireless communication link. For example, a wired communication link such as an USB link, an Ethernet connection, a CAN-bus or the like may be used. Furthermore, any kind of wireless communication link may be also used for transferring the data from the second memory to an external storage device.

By transferring the data from the second memory to an external storage device, the further analysis of the recorded baseband data may be performed by an external analyzing system. Accordingly, the analysis can be performed by means of higher computational resources which may be not available at the vehicle.

In a possible embodiment, the data interface may comprise at least one of a universal serial bus interface, a secure digital memory card interface, an Ethernet interface, a CAN-bus interface, a Bluetooth interface, a wireless local area network interface or a cellphone interface.

Furthermore, any other kind of wired or wireless communication link between the second memory and an external storage memory may be also used. The transfer of the data stored in the second memory to the external storage device may be performed, for example, upon request, in particular upon a request of the external storage device or a control system operating the external storage device. Alternatively, it may be also possible that the data stored in the second memory may be automatically transferred to the external storage device. For example, the data from the second memory may be transferred to the external storage device in predetermined time intervals, upon new data are transferred to the second memory, or any other specific condition.

In a possible embodiment, the first memory may comprise a cyclic memory.

A cyclic memory may be adapted to continuously record data, wherein the oldest data are overwritten by newly received data. In this way, it is possible to store data relating to a specific period of time or a specific amount of data in such a cyclic memory. In particular, the cyclic memory may be a volatile memory. The first memory may have a high writing rate for continuously storing the baseband data provided by the radio frequency receiver.

In a possible embodiment, the radio signal recorder may comprise a power supply unit. The power supply unit may be adapted to provide power supply to the radio signal recorder.

For example, the power supply unit may be independent from the power supply of the further components of the vehicle. For example, the power supply unit may comprise a battery or any other kind of rechargeable electrical storage device. Accordingly, the recording of the baseband data may be performed, even if a power failure exists in the vehicle or the power supply of the vehicle is interrupted due to any other reason.

In a possible embodiment, the radio signal recorder may comprise an interfering unit. The interfering unit may be adapted to generate an interference signal. The generated interference signal may be emitted by the interfering unit.

For example, the interfering unit may comprise a further antenna for emitting the interfering signals. Additionally or alternatively, it may be also possible to emit the interfering signals by an antenna connected to the radio frequency receiver.

The interfering signals may be generated based on predetermined data. For example, the interfering unit may emit a radio frequency signal having a frequency close to a frequency of the signal carrying the baseband signal. In particular, it may be possible to adapt the interfering signal depending on the radio frequency signal received by the radio frequency receiver and/or the baseband data provided by the radio frequency receiver. Alternatively, it may be also possible to generate an interference signal based on predetermined parameters, independent of the received signal and/or the baseband data.

The interfering unit may comprise a signal generator for generating the interference signal. Furthermore, the interfering unit may comprise additional elements such as an attenuator, an amplifier, a mixer or any other appropriate components for generating the interference signal.

In a possible embodiment, the analyzing device of the radio signal analyzer may comprise a physical layer analyzing device. The physical layering analyzing device may be adapted to analyze the physical signal properties of the baseband signal, in particular the physical signal properties of the baseband signal corresponding to the baseband data stored in the second memory.

Accordingly, it is possible to evaluate the physical properties of the radio frequency signal based on the baseband data. In this way it is possible to evaluate the physical properties and to identify characteristics in the physical properties of the signal which have led to the trigger event.

In a possible embodiment, the physical signal properties analyzed by the physical layer analyzing device may comprise at least one of: activities of events in a time domain, signal strength of the baseband signal, signal strength of an interfering signal, a spectrum of the baseband signal, a spectrum of an interfering signal or a signal outside specified limits.

By evaluating the physical properties of the baseband signal based on the baseband data stored in the second memory upon detecting the trigger event, it is possible to identify characteristics in the radio frequency signal which may relate to the event causing the trigger signal. For example, by analyzing a spectrum of the baseband signal or interfering signal, it may be possible to identify one or more characteristic frequencies. Furthermore, it may be possible to evaluate the signal strengths, compute ratio between a signal strength between the baseband signal and interfering signal, or to determine whether or not the signal is outside specific limits, for example a specific frequency range and/or a specific signal strength. However, it is understood that any other characteristic parameter may be also evaluated by the physical layer analyzing device.

In a possible embodiment, the analyzing device of the radio signal analyzer may comprise a protocol layer analyzing device. The protocol layer analyzing device may be adapted to decode the baseband signal. The protocol layer analyzing device may be further adapted to analyze protocol data of the decoded baseband signal.

By analyzing the protocol data of the baseband signal, it may be possible to analyze the information included in the baseband signal. For example, it may be possible to analyze whether or not the data in the baseband signal are in line with the predetermined transmission protocol. Furthermore, it may be possible to evaluate the information in the protocol data. For example, it is possible to determine whether or not the information included in the baseband signal may have caused an event in association with the trigger signal. For example, it may be possible to evaluate whether the information of the baseband signal have caused the vehicle to perform a specific operation.

In a possible embodiment, the protocol layer analyzing device may be adapted to decode the baseband signal according to a predetermined wireless communication protocol.

For example, the predetermined wireless communication protocol may be a cellphone protocol, e.g. LTE, UMTS, GSM, a WLAN communication protocol, a Bluetooth communication protocol, or any other communication protocol, in particular a proprietary communication protocol.

With the present invention it is therefore now possible to record data relating to a wireless communication of a vehicle, such as wireless signals provided to the vehicle. In particular, it is possible to evaluate baseband data of a wireless signal provided to the vehicle in association with a specific event. Accordingly, the specific event can be evaluated in association with the corresponding radio frequency parameters, in particular the baseband data of a wireless signal provided to the vehicle.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of a vehicle in a radio communication environment, the vehicle comprising a radio signal recorder according to an embodiment;
- Fig. 2: shows a block diagram of a radio signal recorder according to an embodiment of the present invention;
- Fig. 3: shows a block diagram of a radio signal recorder according to another embodiment of the present invention;
- Fig. 4: shows a diagram of a signal provided by an interfering unit according to an embodiment of the present invention;
- Fig. 5: shows a block diagram of a radio signal analyzer according to an embodiment of the present invention; and
- Fig. 6: shows a block diagram of an embodiment of a method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

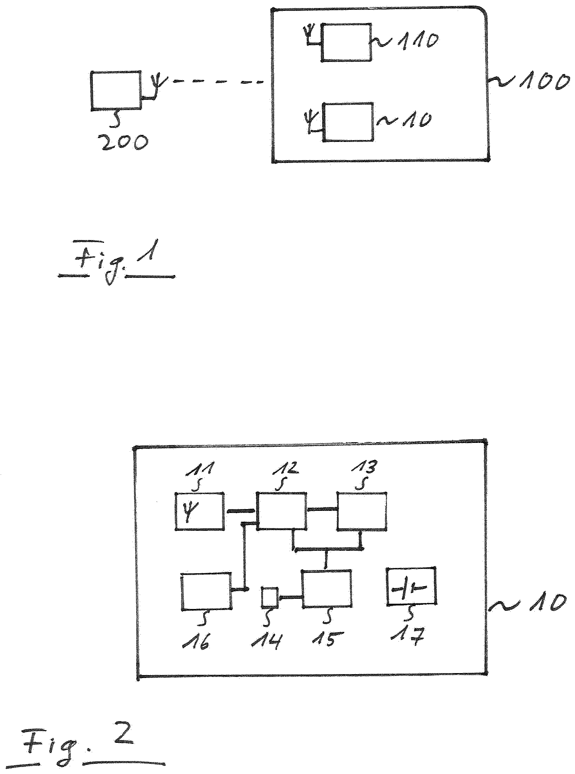

Fig. 1 shows a block diagram of a vehicle 100 performing a wireless communication with a communication partner 200. The vehicle 100 may be any kind of vehicle, for example, a car, a bus, a truck, a train or the like. Furthermore, the vehicle may be ship or an airborne vehicle, for example a plane or a drone. However, any other mobile platform performing a wireless communication may be also possible. In particular, the vehicle may be an autonomous or self-driving vehicle.

The vehicle 100 may perform a wireless communication with a further communication partner 200. The further communication partner 200 may a further vehicle. For example, a car to car communication may be performed between two vehicles in order to exchange data between the individual vehicles. For example, the data may comprise information about a speed, a driving direction, a position of the respective vehicle or information about the surrounding of the respective vehicle. Furthermore, the vehicle 100 may also perform a communication with a communication partner 200 having a fixed spatial position. For example, the vehicle 100 may perform a communication with a base station of a wireless communication network, a satellite or any other kind of communication partner. The communication partner 200 may be a communication partner in a cellular communication network, a wireless local area network (WLAN), for example an access point, a Bluetooth network or any other communication network, in particular a proprietary communication network.

The vehicle 100 may comprise a communication module 110 for transmitting wireless signals and receiving wireless signals. Accordingly, the communication module 110 may establish any kind of wireless communication with one or more further communication partners 200.

Additionally, a vehicle 100 according to the present invention may further comprise a radio signal recorder 10. The radio signal recorder 10 may be arranged in proximity of the communication module 110. In particular, an antenna of the radio signal recorder 10 may be located close to an antenna of the communication module 110. Accordingly, the radio signal recorder 10 may receive the same or at least almost the same wireless signals as the communication module 110.

Alternatively, it may be also possible to use a common antenna for receiving wireless signal by the communication module 110 and the radio signal recorder 10.

Fig. 2 shows a block diagram of a radio signal recorder 10. The radio signal recorder 10 comprises a radio frequency receiver 11, a first memory 12, a second memory 13, a trigger interface 14 and a processor 15. Optionally, the radio signal recorder 10 may further comprise a clock device 16 and/or a power supply unit 17.

As already mentioned above, the radio frequency receiver 11, in particular the antenna of the radio frequency receiver 11 may be arranged in close proximity of the communication module 110. Accordingly, radio frequency receiver 11 may receive the same or at least almost the same radio frequency signals as the communication module 110 of the vehicle 100. The radio frequency receiver 11 may receive radio frequency signals emitted by a communication partner 200 to the vehicle 100. In particular, a frequency range and/or a bandwidth of the radio frequency receiver 11 may be set in accordance with the corresponding parameters of the communication module 110 of the vehicle 100. The radio frequency receiver 11 may comprise appropriate components such as filters, amplifiers, attenuators or the like. In particular, radio frequency receiver 11 may comprise appropriate components for extracting a baseband signal of the received radio frequency signal. For example, radio frequency receiver 11 may comprise a signal generator and a mixer. However, any other appropriate configuration for obtaining a baseband signal included in the received radio frequency signal may be also possible. In case the baseband signal comprises multiple components, for example IQ components, the radio frequency receiver 11 may also split the baseband signal into the individual components and provide several signals for the in-phase component and the quadrature component. Furthermore, the baseband signal, in particular the individual components of the baseband signal may be provided as digital data. For this purpose, the radio frequency receiver 11 may comprise one or more analogue to digital converters. Accordingly, the baseband signal may be converted to a digital data stream. The analogue to digital converters may convert the baseband signal based on an appropriate accuracy, in particular based on an appropriate sampling rate and/or resolution. In particular, the sampling rate of the analogue to digital converters has to be set such that a Nyquist condition is fulfilled.

The digital baseband data may be provided to the first memory 12. In case the baseband signal comprises IQ data, the digital IQ data may be provided to the second memory, and the second memory continuously stores the provided digital baseband data. The first memory 12 may be a cyclic memory or a ring buffer. Accordingly, the first memory 12 may be configured to record baseband data of a predetermined amount of data or relating to a predetermined period of time. Upon receiving further data, i.e. data exceeding the predetermined amount of data or the predetermined period of time, the oldest data are overwritten by the newly received data. The amount of data and/or the specific period of time may be set depending on the storage capacity of the first memory 12. However, it may be also possible to set the storage capacity of the cyclic memory depending on any further appropriate parameters.

The first memory may be a memory having a high writing rate. Accordingly, the baseband data provided by the radio frequency receiver can be stored in the first memory 12 in real-time. In particular, the first memory 12 may be a volatile memory, for example a dynamic random access memory or the like.

Trigger interface 14 may be communicatively coupled with a further device of the vehicle 100 in order to receive a trigger signal. For example, trigger interface 14 may receive a trigger signal from a controller of the vehicle 100. For example, the controller of the vehicle 100 may monitor the status of the vehicle 100 and provide a trigger signal upon a predetermined event has been identified. For example, the predetermined event may be a failure or a malfunction of a specific component or device of the vehicle 100. Furthermore, the specific event may be also a detection of a collision warning or a collision of the vehicle. It may be also possible that the trigger signal may be provided upon detecting an emergency stop or any other abnormal status of the vehicle 100. Furthermore, it may be also possible that the trigger signal may be directly provided from a sensor of the vehicle 100. For example, an acceleration sensor may provide a trigger signal upon detecting an abnormal negative acceleration, which may be an indication of a collision or an emergency stop. However, any other kind of trigger signal may be also possible.

Upon receiving the trigger signal by trigger interface 14, the trigger signal may be forwarded to processor 15, and processor 15 may initiate a transfer of the data stored in the first memory 12 to the second memory 13. The transfer of the data from the first memory 12 to the second memory 13 may be a simple copy operation copying all the data stored in the first memory. Furthermore, the transfer operation may be limited to copying a predetermined amount of data or data relating to a predetermined period of time.

While copying the data from the first memory 12 to the second memory 13, the continuous recording of the baseband data provided from the radio frequency receiver 11 may be continued. Accordingly, the transfer of the data from the first memory 12 to the second memory 13 has to be started with the oldest data. In this way, the oldest data can be copied to the second memory 13 before the respective data are overwritten by newly received data.

Alternatively, it may be also possible that the recording of baseband data in the first memory 12 is interrupted or stopped while copying the data from the first memory 12 to the second memory 13. In this case, the recording of the baseband data provided by the radio frequency receiver 11 may be continued after the transfer of the data from the first memory 12 to the second memory 13 has been finished.

The second memory 13 may be any kind of memory having an appropriate storage capacity. In particular, the storage capacity of the second memory 13 may be a multiple of the storage capacity of the first memory 12. In this way, multiple transfer operations of data from the first memory 12 to the second memory 13 can be performed. Furthermore, the writing rate, i.e. the speed based on which the date can be written into the second memory 13 may be lower than the writing rate of the first memory 12. Thus, a cheaper memory can be used as second memory 13. Furthermore, the second memory 13 may be a nonvolatile memory. Accordingly, the data may remain in the second memory even if a power supply of the radio signal recorder 10 fails.

For example, the second memory 13 may comprise a secure data (SD) card memory, a universal serial bus (USB) stick, a hard disc drive or the like. However, any other appropriate memory, especially any other appropriate nonvolatile memory may be also possible. In particular, the second memory may be a removable memory. Accordingly, the removable memory may be removed and put into another device for analyzing the data stored on the second memory.

As already mentioned above, radio signal recorder 10 may comprise a clock device 16. The clock device 16 may be, for example a real-time clock. The clock device 16 may be synchronized with a further clock of the vehicle 100. Accordingly, a same time basis can be used for controlling the vehicle 100 and for the operations of the radio signal recorder 10. Thus, time information provided by clock device 16 may be stored together with the baseband data in the first memory 12. For example, a time stamp information may be provided by a clock device 16 within predetermined time intervals and this time information is also stored in the first memory 12. Alternatively, the baseband data provided by radio signal recorder 10 may be provided in data packets, and a time stamp information may be added to each data packet. However, any other kind of recording the time information in association with the baseband data may be also possible.

Furthermore, is may be also possible to store any other data related with the received signal in the first memory 11. For example, data relating to the signal strength, a spectrum of the received signal or the like may be provided by radio signal receiver 11 and stored in the first memory 12. Additional data may be computed in real-time and also provided for recording in first memory 12.

The following table illustrates an example for storing the baseband data in the first memory 13:

| time | in-phase data | quadrature data | magnitude of spectral component | power of received signal |
|---|---|---|---|---|
| 12:01:10 | 0,012 | 0, 893 | -2.3 dBm | -2.5 dBm |
| ... | ... | ... | ... | ... |

Furthermore, radio signal recorder 10 may comprise a power supply unit 17. Power supply unit 17 may comprise an electronic storage component, for example a battery, in particular a rechargeable battery or the like. The power supply unit 17 may provide power to the individual devices of the radio signal recorder 10. Thus, the recording of the baseband data, and in particular the transfer of the data from the first memory 12 to the second memory 13 can be performed even if a power failure occurs in the power supply of the vehicle 100.

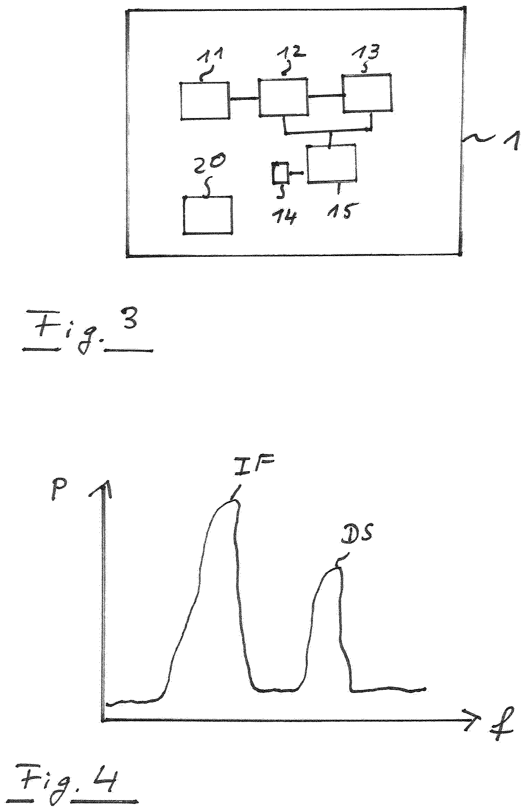

Fig. 3 shows a block diagram of a radio signal recorder 10 according to a further embodiment. The radio signal recorder 10 in Fig. 3 mainly corresponds to the radio signal recorder as already described above in connection with Fig. 2. Thus, all explanations of the previously described radio signal recorder 10 also are valid for the radio signal recorder 10 in this embodiment. As can be seen in Fig. 3, the radio signal recorder 10 further comprises an interfering unit 20. The interfering unit 20 may generate and emit any kind of interfering signals. For this purpose, interfering unit 20 may comprise a signal generator for generating interfering signals and an antenna for emitting the generated interfering signals. In this way, the robustness of the wireless communication of vehicle 100 can be tested. At the same time radio signal recorder 10 may record the baseband data. Thus, the impact of the interfering signals can be monitored and the baseband data can be monitored under the influence of an interfering signal.

For example, interfering unit 20 may generate interference signals based on a predetermined configuration or a predetermined set of data. For example, interfering unit 20 may emit interference signals having a predetermined frequency or frequency range and a predetermined signal strength, or a predetermined spectrum. Furthermore, it may be also possible to adapt the parameters of the interference signals based on the radio frequency signal received by the radio frequency receiver 11. For example, a frequency, a bandwidth, a spectrum or a signal strength may be adapted depending on the received radio frequency signal. However, any other scheme for adapting the interference signal may be also possible.

Fig. 4 shows a diagram illustrating power of the interfering signal IF and the data signal DS over the frequency. As can be seen in this diagram, the interfering signal may have a main frequency slightly different from the main frequency of the data signal DS. Furthermore, the magnitude of the interfering signal IF may be different from the magnitude of the data signal DS. However, it may be even possible that a number of more than one interfering signals may be also applied at the same time. Furthermore, it may be possible to generate an interfering signal of a broader frequency range or a spectrum comprising multiple frequencies.

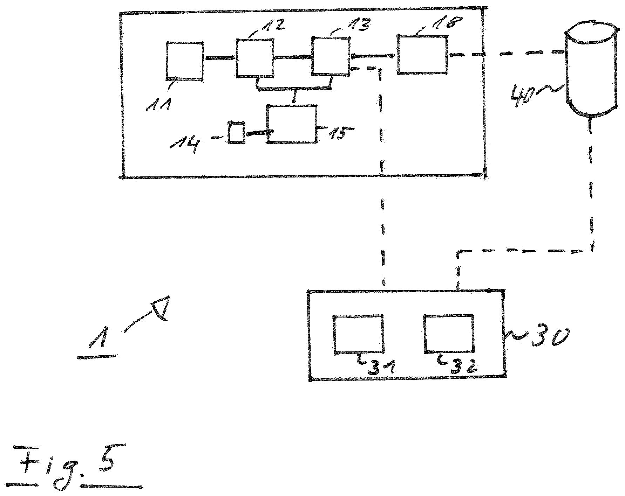

Fig. 5 shows a block diagram of a radio signal analyzer 1 according to an embodiment. The radio signal analyzer 1 may comprise a radio signal recorder 10 as described above, and an analyzing device 30. The analyzing device 30 may comprise a physical layer analyzing device 31 and/or a protocol layer analyzing device 32. The analyzing device 30 may analyze the baseband data stored in the second memory 13. For example, physical layer analyzing device 31 may evaluate the baseband data stored in the second memory 13 in order to determine physical parameters such as signal strength of the baseband signal and/or an interfering signal, frequency or spectrum of the baseband signal or the interfering signal, a history of the baseband signal or the interfering signal, an identification of signal components being outside a predetermined limit, or any other kind of physical parameters which can be derived from the baseband data.

Additionally or alternatively, protocol layer analyzing device 32 may decode the baseband data stored in the second memory 13 in order to extract information such as protocol data. Accordingly, protocol layer analyzing device 32 may analyze the information of the protocol data. For example, information may be identified which may cause an event which has initiated the trigger signal. For example, protocol layer analyzing device 32 may decode the baseband signal according to a specific wireless communication standard such as a cellular communication standard (e.g. LTE, UMTS, GSM), a WiFi communication standard, a Bluetooth communication standard or any other standard or proprietary communication protocol.

In order to analyze the data stored in the second memory 13, the radio signal data analyzer 30 may be communicatively coupled with the second memory 13. For example, a wired connection between the analyzing device 30 and the radio signal recorder 10 may be established. For example, the wired connection may be based on an Ethernet connection, an USB connection, or any other appropriate wired connection. Furthermore, it may be also possible to establish a wireless communication, for example a Bluetooth communication or a WiFi communication. However, any other appropriate communication link between the second memory 13 and the radio signal data analyzer 30 may be also possible. Furthermore, as already described above, it may be also possible to remove the second memory 13 from the radio signal recorder 10 and to put the second memory 13 into the analyzing device 30.

Furthermore, it may be also possible to transfer the data stored in the second memory 13 to an external storage device 40. In this case, analyzing device 30 may read the data from the external storage device 40 for analyzing the respective data. For this purpose, a communication link between the second memory 13 and the external storage device 40 may be established. For this purpose, an additional interface 18 may be provided in the radio signal recorder 10. The communication interface 18 may be any kind of appropriate communication interface for establishing a wired or wireless communication. For example, the communication may be established based on an USB connection, a Ethernet connection or any other appropriate wired connection. Furthermore, it may be also possible to transfer the data from the second memory 13 to the external storage device 40 by a wireless communication link. For this purpose, communication interface 18 may establish a cellphone communication, a WiFi communication, a Bluetooth communication or any other appropriate wireless communication. In this way, the baseband data relating to a trigger event may be stored in an external storage device 40, for example in a cloud.

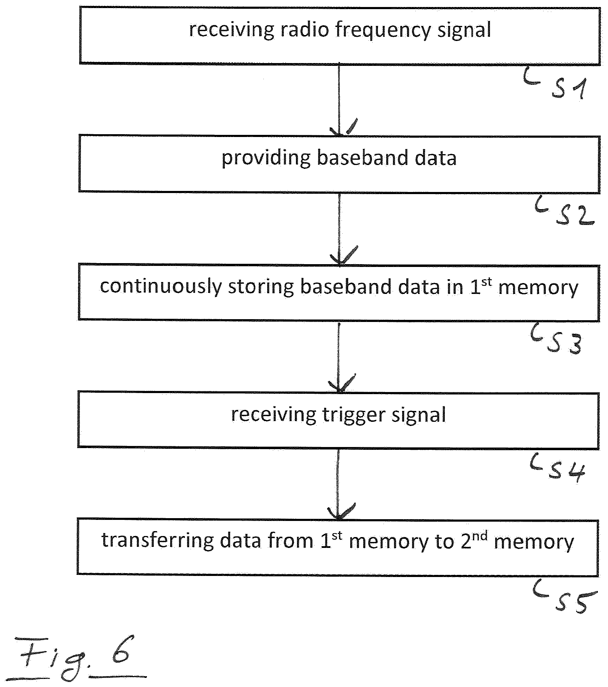

Fig. 6 shows a flowchart of a radio signal analyzing method according to an embodiment. The radio signal analyzing method may analyze a radio frequency signal provided to a vehicle 100. In particular, the method may comprise a step S1 of receiving a radio frequency signal. The radio frequency signal may be received, for example by the radio signal recorder 11 as described above. In a step S2, baseband data of the received radio frequency signal may be provided. This may be also performed by the radio signal recorder 11. In step S3, the provided baseband data are continuously stored in a first memory 12. In step S4, a trigger signal is received. The trigger signal may be received by the trigger interface 14. Finally, in a step S5, the baseband data which are stored in the first memory 12 are transferred to a second memory 13 upon receiving the trigger signal. Furthermore, any further steps may be performed in line with the operations as described above in connection with the radio signal recorder 10 and/or the radio signal analyzer 30.

Summarizing, the present invention relates to a recording and analyzing of radio frequency signals provided to a vehicle. A baseband signal is continuously recorded in a cyclic memory. Upon detecting a predetermined trigger signal, the recorded baseband data are transferred to a further memory. Accordingly, it is possible to analyze the baseband signal, and thus to evaluate the radio frequency parameters at a later point of time. In this way, a monitoring of radio frequency parameters, in particular a baseband signal on a moving device such as a vehicle can be achieved.

## Claims

1. A radio signal recorder (10) for recording radio frequency data of a radio frequency signal provided to a vehicle (100), wherein the vehicle comprises a communication module (110) for transmitting and receiving wireless signals, the radio signal recorder (10) comprising:
a radio frequency receiver (11), adapted to receive a radio frequency signal in a same or at least similar frequency range than a receiver or transceiver used by the vehicle (100) and to provide baseband data of the received radio frequency signal;
a first memory (12), adapted to continuously store the baseband data provided by the radio frequency receiver, wherein the first memory (12) is configured to record the baseband data of a predetermined amount of data or relating to a predetermined period of time such that, upon receiving data exceeding the predetermined amount of data or the predetermined period of time, oldest data is overwritten by newly received data;
a trigger interface (14), adapted to receive a trigger signal from a controller of the vehicle (100);
a second memory (13); and
a processor (15), adapted to transfer the baseband data stored in the first memory (12) to the second memory (13) upon a predetermined trigger signal has been received by the trigger interface (14).

2. The radio signal recorder (10) according to claim 1, wherein the baseband data comprise in-phase data and quadrature data.

3. The radio signal recorder (10) according to claim 1 or 2, wherein the trigger interface (14) is adapted to receive a trigger signal related to at least one of a collision warning, collision event, malfunction, power failure or emergency stop of the vehicle.

4. The radio signal recorder (10) according to any of claims 1 to 3, comprising a clock device (16), adapted to provide time information,
wherein the first memory (12) is adapted to store the baseband data in association with the corresponding time information provided by the clock device (16).

5. The radio signal recorder (10) according to any of claims 1 to 4, comprising a data interface (18), adapted to communicatively couple the second memory (13) and an external storage device (40).

6. The radio signal recorder (10) according claim 5, wherein the data interface (18) comprises at least one of a universal serial bus interface, a secure digital memory card interface, a Bluetooth interface, a wireless local area network interface or a cellphone interface.

7. The radio signal recorder (10) according to any of claims 1 to 6, wherein the first memory (12) comprises a cyclic memory.

8. The radio signal recorder (10) according to any of claims 1 to 7, comprising a power supply unit (17), adapted to provide a power supply to the radio signal recorder.

9. The radio signal recorder (10) according to any of claims 1 to 8, comprising an interfering unit (20), adapted to generate an interference signal, and to emit generated interference signal.

10. A radio signal analyzer (1) for analyzing a radio frequency signal provided to a vehicle (100) with a communication module (110) for transmitting and receiving wireless signals, the analyzer (1) comprising:
the radio signal recorder (10) according to any of claims 1 to 9;
an analyzing device (30), adapted to analyze the baseband data stored in the second memory (13).

11. The radio signal analyzer (1) according to claim 10, wherein the analyzing device (30) comprises a physical layer analyzing device (31), adapted to analyze the physical signal properties of the baseband data stored in the second memory (13).

12. The radio signal analyzer (1) according to claim 11, wherein the physical signal properties analyzed by the physical layer analyzing device comprise at least one of activities of events in a time domain, signal strength of the baseband signal, signal strength of an interfering signal, a spectrum of the baseband signal, a spectrum of an interfering signal or a signal outside specified limits.

13. The radio signal analyzer (1) according to any of claims 10 to 12, wherein the analyzing device (30) comprises a protocol layer analyzing device (32), adapted to decode the baseband signal and to analyze protocol data of the decoded baseband signal.

14. The radio signal analyzer (1) according to claim 13, wherein the protocol layer analyzing device is adapted to decode the baseband signal according to a predetermined wireless communication protocol.

15. A radio signal analyzing method for analyzing a radio frequency signal provided to a vehicle (100), wherein the vehicle comprises a communication module (110) for transmitting and receiving wireless signals, the method comprising:
receiving (S1) a radio frequency signal, wherein the received radio frequency signal is in a same or similar frequency range than a receiver or transceiver used by the vehicle (100);
providing (S2) baseband data of the received radio frequency signal;
continuously storing (S3) the provided baseband data in a first memory (12), wherein the first memory (12) is configured to record the baseband data of a predetermined amount of data or relating to a predetermined period of time such that, upon receiving data exceeding the predetermined amount of data or the predetermined period of time, oldest data is overwritten by newly received data;
receiving (S4) a trigger signal from a controller of the vehicle (100);
transferring (S5) the baseband data stored in the first memory (12) to a second memory (13) upon receiving the trigger signal; and
analyzing the baseband data stored in the second memory (13) .

## Patentansprüche

1. Funksignalaufzeichnungseinrichtung (10) zum Aufzeichnen von Hochfrequenzdaten eines Hochfrequenzsignals, das einem Fahrzeug (100) bereitgestellt wird, wobei das Fahrzeug ein Kommunikationsmodul (110) zum Senden und Empfangen von drahtlosen Signalen umfasst, die Funksignalaufzeichnungseinrichtung (10) umfassend:
einen Hochfrequenzempfänger (11), der angepasst ist, um ein Hochfrequenzsignal in einem gleichen oder mindestens ähnlichen Frequenzbereich als ein Empfänger oder Sendeempfänger zu empfangen, der durch das Fahrzeug (100) verwendet wird, und um Basisbanddaten des empfangenen Hochfrequenzsignals bereitzustellen;
einen ersten Speicher (12), der angepasst ist, um die Basisbanddaten, die durch den Hochfrequenzempfänger bereitgestellt werden, kontinuierlich zu speichern, wobei der erste Speicher (12) konfiguriert ist, um die Basisbanddaten einer zuvor bestimmten Datenmenge aufzuzeichnen oder sich auf einen zuvor bestimmten Zeitraum derart zu beziehen, dass, bei dem Empfangen von Daten, die zuvor bestimmte Datenmenge oder die zuvor bestimmte Zeitdauer überschritten wird, älteste Daten durch neu empfangene Daten überschrieben werden;
eine Auslöseschnittstelle (14), die angepasst ist, um ein Auslösesignal von einer Steuerung des Fahrzeugs (100) zu empfangen;
einen zweiten Speicher (13); und
einen Prozessor (15), der angepasst ist, um die Basisbanddaten, die in dem ersten Speicher (12) gespeichert sind, auf den zweiten Speicher (13) zu übertragen, wenn ein zuvor bestimmtes Auslösesignal durch die Auslöseschnittstelle (14) empfangen wurde.

2. Funksignalaufzeichnungseinrichtung (10) nach Anspruch 1, wobei die Basisbanddaten Phasendaten und Quadraturdaten umfassen.

3. Funksignalaufzeichnungseinrichtung (10) nach Anspruch 1 oder 2, wobei die Auslöseschnittstelle (14) angepasst ist, um ein Auslösesignal zu empfangen, das sich auf eine Kollisionswarnung, ein Kollisionsereignis, eine Fehlfunktion, einen Stromausfall oder einen Notbremsung des Fahrzeugs bezieht.

4. Funksignalaufzeichnungseinrichtung (10) nach einem der Ansprüche 1 bis 3, umfassend eine Taktvorrichtung (16), die angepasst ist, um Zeitinformationen bereitzustellen, wobei der erste Speicher (12) angepasst ist, um die Basisbanddaten in Verbindung mit den entsprechenden Zeitinformationen zu speichern, die durch die Taktvorrichtung (16) bereitgestellt werden.

5. Funksignalaufzeichnungseinrichtung (10) nach einem der Ansprüche 1 bis 4, umfassend eine Datenschnittstelle (18), die angepasst ist, um den zweiten Speicher (13) und eine externe Speicherungsvorrichtung (40) kommunikativ zu koppeln.

6. Funksignalaufzeichnungseinrichtung (10) nach Anspruch 5, wobei die Datenschnittstelle (18) mindestens eines von einer Universal-Serial-Bus-Schnittstelle, einer Schnittstelle einer sicheren digitalen Speicherkarte, einer Bluetooth-Schnittstelle, einer Schnittstelle eines drahtlosen lokalen Netzwerks oder einer Mobiltelefonschnittstelle umfasst.

7. Funksignalaufzeichnungseinrichtung (10) nach einem der Ansprüche 1 bis 6, wobei der erste Speicher (12) einen zyklischen Speicher umfasst.

8. Funksignalaufzeichnungseinrichtung (10) nach einem der Ansprüche 1 bis 7, umfassend eine Stromversorgungseinheit (17), die angepasst ist, um der Funksignalaufzeichnungseinrichtung eine Stromversorgung bereitzustellen.

9. Funksignalaufzeichnungseinrichtung (10) nach einem der Ansprüche 1 bis 8, umfassend eine Störeinheit (20), die angepasst ist, um ein Störsignal zu erzeugen, und um ein erzeugtes Störsignal zu emittieren.

10. Funksignalanalysator (1) zum Analysieren eines Hochfrequenzsignals, das einem Fahrzeug (100) mit einem Kommunikationsmodul (110) zum Senden und Empfangen von drahtlosen Signalen bereitgestellt wird, der Analysator (1) umfassend:
Funksignalaufzeichnungseinrichtung (10) nach einem der Ansprüche 1 bis 9;
eine Analysevorrichtung (30), die angepasst ist, um die Basisbanddaten zu analysieren, die in dem zweiten Speicher (13) gespeichert sind.

11. Funksignalanalysator (1) nach Anspruch 10, wobei die Analysevorrichtung (30) eine Analysevorrichtung (31) der physischen Schicht umfasst, die angepasst ist, um die physischen Signaleigenschaften der Basisbanddaten zu analysieren, die in dem zweiten Speicher (13) gespeichert sind.

12. Funksignalanalysator (1) nach Anspruch 11, wobei die physischen Signaleigenschaften, die durch die Analysevorrichtung der physischen Schicht analysiert werden, mindestens eines von Aktivitäten von Ereignissen in einem Zeitbereich, einer Signalstärke des Basisbandsignals, einer Signalstärke eines Störsignals, eines Spektrums des Basisbandsignals, eines Spektrums eines Störsignals oder eines Signals außerhalb spezifizierter Grenzen umfassen.

13. Funksignalanalysator (1) nach einem der Ansprüche 10 bis 12, wobei die Analysevorrichtung (30) eine Protokollschichtanalysevorrichtung (32) umfasst, die angepasst ist, um das Basisbandsignal zu decodieren und Protokolldaten des decodierten Basisbandsignals zu analysieren.

14. Funksignalanalysator (1) nach Anspruch 13, wobei die Protokollschichtanalysevorrichtung angepasst ist, um das Basisbandsignal gemäß einem zuvor bestimmten drahtlosen Kommunikationsprotokoll zu decodieren.

15. Funksignalanalyseverfahren zum Analysieren eines Hochfrequenzsignals, das einem Fahrzeug (100) bereitgestellt wird, wobei das Fahrzeug ein Kommunikationsmodul (110) zum Senden und Empfangen von drahtlosen Signalen umfasst, das Verfahren umfassend:
Empfangen (S1) eines Hochfrequenzsignals, wobei das empfangene Hochfrequenzsignal in einem gleichen oder ähnlichen Frequenzbereich als ein Empfänger oder Sendeempfänger liegt, der durch das Fahrzeug (100) verwendet wird;
Bereitstellen (S2) von Basisbanddaten des empfangenen Hochfrequenzsignals;
kontinuierliches Speichern (S3) der bereitgestellten Basisbanddaten in einem ersten Speicher (12), wobei der erste Speicher (12) konfiguriert ist, um die Basisbanddaten einer zuvor bestimmten Datenmenge aufzuzeichnen oder sich auf einen zuvor bestimmten Zeitraum derart zu beziehen, dass, bei dem Empfangen von Daten, die zuvor bestimmte Datenmenge oder die zuvor bestimmte Zeitdauer überschritten wird, älteste Daten durch neu empfangene Daten überschrieben werden;
Empfangen (S4) eines Auslösesignals von einer Steuerung des Fahrzeugs (100);
Übertragen (S5) der Basisbanddaten, die in dem ersten Speicher (12) gespeichert sind, in einen zweiten Speicher (13) bei dem Empfangen des Auslösesignals; und
Analysieren der Basisbanddaten, die in dem zweiten Speicher (13) gespeichert sind.

## Revendications

1. Enregistreur de signal radio (10) pour l'enregistrement de données de radiofréquence d'un signal radiofréquence fourni à un véhicule (100), dans lequel le véhicule comprend un module de communication (110) pour transmettre et recevoir des signaux sans fil, l'enregistreur de signal radio (10) comprenant :
un récepteur de radiofréquences (11), adapté pour recevoir un signal radiofréquence dans une plage de fréquences identique ou au moins similaire à celle d'un récepteur ou d'un émetteur-récepteur utilisé par le véhicule (100) et pour fournir des données en bande de base du signal radiofréquence reçu ;
une première mémoire (12), adaptée pour stocker en continu les données de bande de base fournies par le récepteur de radiofréquences, dans lequel la première mémoire (12) est configurée pour enregistrer les données de bande de base d'une quantité prédéterminée de données ou se rapportant à une période de temps prédéterminée de telle sorte que, lors de la réception de données dépassant la quantité prédéterminée de données ou la période de temps prédéterminée, les données les plus anciennes sont écrasées par les données nouvellement reçues ;
une interface de déclenchement (14), adaptée pour recevoir un signal de déclenchement d'un dispositif de commande du véhicule (100) ;
une seconde mémoire (13) ; et
un processeur (15), adapté pour transférer les données de bande de base stockées dans la première mémoire (12) à la seconde mémoire (13) lorsqu'un signal de déclenchement prédéterminé a été reçu par l'interface de déclenchement (14).

2. Enregistreur de signal radio (10) selon la revendication 1, dans lequel les données de bande de base comprennent des données en phase et des données en quadrature.

3. Enregistreur de signal radio (10) selon la revendication 1 ou 2, dans lequel l'interface de déclenchement (14) est adaptée pour recevoir un signal de déclenchement relatif à au moins l'un parmi un avertissement de collision, un événement de collision, un dysfonctionnement, une panne d'alimentation ou un arrêt d'urgence du véhicule.

4. Enregistreur de signal radio (10) selon l'une quelconque des revendications 1 à 3, comprenant un dispositif horloge (16), adapté pour fournir des informations temporelles,
dans lequel la première mémoire (12) est adaptée pour stocker les données de bande de base en association avec les informations temporelles correspondantes fournies par le dispositif horloge (16).

5. Enregistreur de signal radio (10) selon l'une quelconque des revendications 1 à 4, comprenant une interface de données (18), adaptée pour coupler en communication la seconde mémoire (13) et un dispositif de stockage externe (40).

6. Enregistreur de signal radio (10) selon la revendication 5, dans lequel l'interface de données (18) comprend au moins une parmi une interface de bus série universel, une interface de carte mémoire Secure Digital, une interface Bluetooth, une interface de réseau local sans fil ou une interface de téléphone cellulaire.

7. Enregistreur de signal radio (10) selon l'une quelconque des revendications 1 à 6, dans lequel la première mémoire (12) comprend une mémoire cyclique.

8. Enregistreur de signal radio (10) selon l'une quelconque des revendications 1 à 7, comprenant une unité d'alimentation électrique (17), adaptée pour fournir une alimentation électrique à l'enregistreur de signal radio.

9. Enregistreur de signal radio (10) selon l'une quelconque des revendications 1 à 8, comprenant une unité d'interférence (20), adaptée pour générer un signal d'interférence, et pour émettre un signal d'interférence généré.

10. Analyseur de signal radio (1) pour analyser un signal radiofréquence fourni à un véhicule (100) avec un module de communication (110) pour transmettre et recevoir des signaux sans fil, l'analyseur (1) comprenant :
l'enregistreur de signal radio (10) selon l'une quelconque des revendications 1 à 9 ;
un dispositif d'analyse (30), adapté pour analyser les données de bande de base stockées dans la seconde mémoire (13).

11. Analyseur de signal radio (1) selon la revendication 10, dans lequel le dispositif d'analyse (30) comprend un dispositif d'analyse de couche physique (31), adapté pour analyser les propriétés de signal physique des données de bande de base stockées dans la seconde mémoire (13).

12. Analyseur de signal radio (1) selon la revendication 11, dans lequel les propriétés de signal physique analysées par le dispositif d'analyse de couche physique comprennent au moins l'une parmi des activités d'événements dans un domaine temporel, une intensité de signal du signal de bande de base, une intensité de signal d'un signal d'interférence, un spectre du signal de bande de base, un spectre d'un signal d'interférence ou un signal en dehors des limites spécifiées.

13. Analyseur de signal radio (1) selon l'une quelconque des revendications 10 à 12, dans lequel le dispositif d'analyse (30) comprend un dispositif d'analyse de couche de protocole (32), adapté pour décoder le signal de bande de base et pour analyser des données de protocole du signal de bande de base décodé.

14. Analyseur de signal radio (1) selon la revendication 13, dans lequel le dispositif d'analyse de couche de protocole est adapté pour décoder le signal de bande de base selon un protocole de communication sans fil prédéterminé.

15. Procédé d'analyse de signal radio pour analyser un signal radiofréquence fourni à un véhicule (100), dans lequel le véhicule comprend un module de communication (110) pour transmettre et recevoir des signaux sans fil, le procédé comprenant :
la réception (S1) d'un signal radiofréquence, dans lequel le signal radiofréquence reçu se situe dans une plage de fréquences identique ou similaire à un récepteur ou émetteur-récepteur utilisé par le véhicule (100) ;
la fourniture (S2) de données de bande de base du signal radiofréquence reçu ;
le stockage en continu (S3) des données de bande de base fournies dans une première mémoire (12), dans lequel la première mémoire (12) est configurée pour enregistrer les données de bande de base d'une quantité prédéterminée de données ou se rapportant à une période de temps prédéterminée de telle sorte que, lors de la réception de données dépassant la quantité prédéterminée de données ou la période de temps prédéterminée, des données anciennes sont écrasées par des données nouvellement reçues ;
la réception (S4) d'un signal de déclenchement provenant d'un dispositif de commande du véhicule (100) ;
le transfert (S5) des données de bande de base stockées dans la première mémoire (12) à une seconde mémoire (13) lors de la réception du signal de déclenchement ; et
l'analyse des données de bande de base stockées dans la seconde mémoire (13).
